Europäisches Patentamt

**(19)** European Patent Office

Office européen des brevets

**(11)** Publication number : **0 577 177 B1**

**(12)** # EUROPEAN PATENT SPECIFICATION

**(45)** Date of publication of patent specification :
27.12.95 Bulletin 95/52

**(51)** Int. Cl.⁶ : **H04Q 3/00**

**(21)** Application number : 93201759.3

**(22)** Date of filing : 18.06.93

**(54)** Telecommunications network with automatic calculation of a polling time -instants table

**(30)** Priority : 24.06.92 NL 9201119

**(43)** Date of publication of application :
05.01.94 Bulletin 94/01

**(45)** Publication of the grant of the patent :
27.12.95 Bulletin 95/52

**(84)** Designated Contracting States :
AT BE CH DE DK ES FR GB GR IE IT LI LU NL
PT SE

**(56)** References cited :
IEEE INFOCOM '88, SESSION 2D, PAPER 4, 27
March 1988, NEW ORLEANS, US pages 1 - 8
G.D. TSIOTRAS

**(56)** References cited :
PROCEEDINGS OF THE 14TH IFIP WG 7.3 INT.
SYMPOSIUM ON COMPUTER PERFORMANCE
MODELLING, MEASUREMENT AND EVALUA-
TION 12 September 1990, EDINBURGH, GB
pages 349 - 361 O.J. BOXMA ET AL.
COMMUTATION ET TRANSMISSION vol. 10,
no. 3, 1988, PARIS FR pages 19 - 28 A.FAL-
GUIERES ET AL.
PATENT ABSTRACTS OF JAPAN vol. 15, no.
359 (E-1110)11 September 1991 & JP-A-31 39
948

**(73)** Proprietor : Koninklijke PTT Nederland N.V.
P.O. Box 95321
NL-2509 CH The Hague (NL)

**(72)** Inventor : Harink, Johannes Hendrikus
Antonius
Muntzmate 2
NL-8014 LE Zwolle (NL)
Inventor : Huitema, Gregorius Bonifatius
Grevingaheerd 99
NL-9737 SH Groningen (NL)

EP 0 577 177 B1

## Description

## A. BACKGROUND OF THE INVENTION

The invention relates to a telecommunication network, comprising a mediation centre and a number of network stations, the mediation centre executing consecutive polling sessions, during which data queues in those network stations, comprising data elements, are polled in accordance to a polling table

Such a network is known from [1]. The disclosed network traffic management system (NTMS) provides centralized and integrated operations, administration and maintenance support to a switched telecommunications network. To detect and identify network overload, the NTMS collects data by polling switches. Polling is executed every five-minute period, collecting traffic counts, and every 30-second period, collecting discrete (event) information, so there is made use of a fixed time schedule.

For the collection of rather large and unpredictable amounts of data a more adaptive schedule has to applied. A theoretical method to establish such schedule is known from reference [2] . The method presented there encompasses a number of steps in which consecutively
- using the queue characteristic values for the various queues, such as the instantaneous or average queue size, queue growth, polling time per element and switchover time between two queues to be polled consecutively, the polling frequency per queue is calculated;
- using the polling frequencies per queue calculated in this way, the size of the polling table and the absolute numbers of polling sessions per polling cycle are calculated for each queue;
- using the absolute numbers of polling sessions of the various queues, the polling sequence of the various queues is established.

These steps result in an efficient polling table which is however limited to indicating the sequence of queues to be polled consecutively. Such a polling sequence table is not feasible in a system for the polling of extremely large numbers of 'call records' of telephone conversations (currently approximately 17 million per day in the Netherlands) for the purposes of 'billing' said call records. For example such a system provides for a number of polling elements ('mediations') which connect with various subscriber exchanges at pre-planned time instants and read out and transfer the call records collected there since the last polling session to a 'billing centre'.

Until now, such polling time instant tables have usually been produced 'off the cuff' and in a fairly intuitive way. The efficiency of such tables cannot, in fact, be calculated, whilst the construction and later modifications take rather a lot of time.

## B. SUMMARY OF THE INVENTION

The object of the invention is to provide an improvement in constructing polling time instant tables, in particular for polling call records by 'mediations', using the method which is known per se for the 'automatic' construction of polling sequence tables, and extending this to result in a polling time instants table.

According to the present invention, the polling time instants table is calculated entirely automatically, taking the queue characteristic values being the queue growth, the polling time per data element and the switchover time ($c_i$) between two queues to be polled consecutively as a starting point, the time which the call records remain in the various queues being optimised to a minimum. As a result, the queues are not unnecessarily long and the call records can be processed as quickly as possible in the 'billing centre'.

Thus the invention according to Claim 1 provides a telecommunication network, comprising a mediation centre and a number of network stations, in which first a polling SEQUENCE table is calculated and this is subsequently converted into a polling TIME INSTANTS table which indicates the optimum absolute polling time instants per queue. The steps according to the invention, being presented in the claims, can be executed consecutively or - where possible - simultaneously. Those steps will be presented in detail in paragraph D.

The advantage is that the efficiency can be calculated and optimised. A second advantage is that such a polling table can be recalculated in a relatively short time, so that not only can the polling system be controlled by a static polling table calculated once, but in this case, the polling table can be regularly adapted, in particular to the supply of call records in the queues (exchanges) which varies with time. In the recalculation, use can always be made of the latest queue characteristic values which may for example be logged during the latest but one polling cycle or always just before each new polling cycle. The queue characteristic values may relate to a shorter or longer period, for example always to the last polling session or the last n polling sessions.

## C. REFERENCES

[1] Tsiotras, G.D.; Design and performance of a traffic management system for an intelligent network; IEEE INFOCOM '88 - The Conference on Computer Communications Proceedings. Seventh Annual Joint Conference of the IEEE Computer and Communcations Societies - Networks: Evolution or Revolution? (Cat. No.88CH2534-6), New Orleans, LA, USA, 27-31 March 1988

[2] Boxma, O.J. et al.; Optimization of polling systems; Report BS-R8932, Centre for Mathematics and Computer Science, P.O.Box 4079, Amsterdam, The Netherlands.

## D. ILLUSTRATIVE EMBODIMENTS

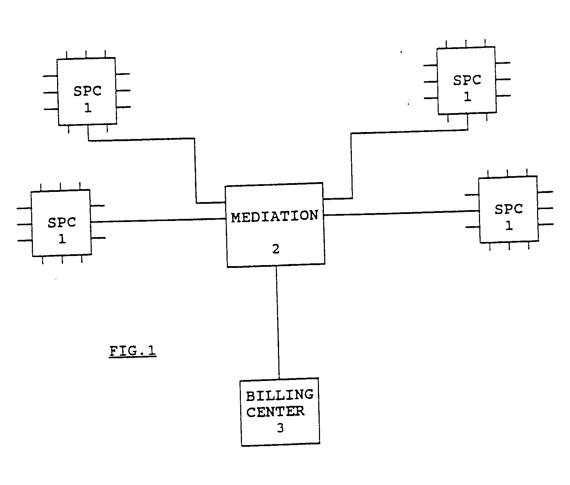

Figure 1 shows diagrammatically a number of telephone exchanges 1 which are linked to one another/up by a telephone network - not drawn - by which subscribers connected to the exchanges can call each other. In each exchange 1, a 'call record' is produced for each conversation (or call), in which amongst other things a note is made of the calling subscriber's number, (A-subscriber), the number of the called subscriber, (B-subscriber) and the start and end time of the conversation. This call record is stored in a queue in order to be read out by a 'mediation' 2 at a certain point in time. Thus a queue, (file), of call records is formed in all exchanges 1. These queues are polled by the mediation 2; that is to say the call records are copied to the mediation 2 and are subsequently deleted from the queue. The mediation 2 selects the various queues to be polled according to a pre-calculated schedule which is stored in a polling time instants table in the mediation 2. The call records read out from the queues of the various subscriber exchanges 1 by the mediation 2 are subsequently passed on to the billing centre 3, where they are processed to form itemised call invoices which are sent out to the subscribers, for example once per month.

An example will be given below of the calculation results when calculating an efficient polling table for the polling of call record queues in the various subscriber exchanges 1.

Four exchanges, the characteristic values of which are shown in Table 1, are used as a starting point. It is pointed out that in practice a number of call records are 'bundled' to form call record files ('CR files'). See TABLE 1.

As a first sub-step the polling frequency per queue is calculated using the queue characteristic values for the various exchanges, the average queue growth (a), the polling time per CR file (b) and the switchover time (c) between two exchanges to be polled consecutively. See TABLE 2.

As a second sub-step the size of the polling table and the absolute numbers of polling sessions per polling cycle of each exchange are calculated using the polling frequencies per exchange calculated in this way. See TABLE 3.

The third sub-step establishes the polling sequence of the various queues using the absolute numbers of polling sessions of the various queues, See TABLE 4a and TABLE 4b.

The three sub-steps above form the first step of the method according to the present invention, which was summarised as follows in the preceding pages:

The polling sequence of the various queues is calculated using one or more queue characteristic values for the various queues, in this case the average queue growth, polling time per element and switchover time between two queues.

In the illustrative embodiment these three sub-steps are taken from reference 1, to which reference is also made for further back-up. The polling sequence table can, incidentally, also be calculated using another approach.

As a second step, the time duration (length) for the polling of each queue is calculated using one or more or these queue characteristic values and taking into consideration a margin factor d, to be allocated as a parameter. This margin factor serves to ensure that the calculated polling table is not allocated too tightly, so that if at a certain time the actual number of call records proves to be larger than the number of call records used in the calculation, the mediation does not come under time pressure leading to the session having to be terminated before all of the call records have been read in, or the following session having to start later than had been planned according to the polling table. For this reason a margin factor is introduced which is used to 'stretch' the calculated minimum lengths of the different polling sessions, (calculated on the basis of the average growth in the numbers of call records), by the factor di. Moreover, under certain circumstances, the decision may be taken to select a margin factor $d = 0$. Provision must however be made to solve the mediation's 'time pressure' problem.

The said lengths of the different polling sessions are calculated from a number of linear equations $A * z = p$, in which A represents a (mt x mt)-matrix, i.e. in this illustrative embodiment a (9 x 9)-matrix. Furthermore, z is a vector $(z_1, z_2, ....z_{mt})$, in which $z_i$ represents the length (to be calculated) of the polling session i (at ex-

change $Q_i$). In this illustrative embodiment in which $mt = 9$, z therefore represents the vector $z1,...,z9$, in which $z3$ for example indicates the length of the polling session for exchange $Q3$, i.e. exchange 4 (see table 4b). Finally, p represents a vector $(p1,...,pmt)$ which, as is the case with matrix A, can be found using the (auxiliary)-matrix H in which it is indicated whether or not a specific polling session occurs in a 'sub-cycle', a sub-cycle being a part of the complete polling cycle which starts at a specific exchange, for example exchange 3, and ends when that exchange reoccurs in the polling table for the first time.

The H matrix must therefore be calculated first, in order to calculate vector p. In this illustrative embodiment this is also a (9 x 9)-matrix. The elements in this matrix may have the value 1 or 0, namely $Hkl = 1$ if exchange $Ql$ does not occur in the exchange array $Q(k+1),...,Q(l-1)$, or $Hkl = 0$ if exchange $Ql$ does occur therein. The H-matrix is shown in Table 5.

The following holds good for matrix A:

$$Akl = - Hlk * \{a(Qk) * b(Qk) * \{1 + d(Qk)\}\ \text{for}\ k \neq l,\ \text{and}$$
$$Akl = 1 - Hlk * \{a(Qk) * b(Qk) * \{1 + d(Qk)\}\ \text{for}\ k = l.$$

The following holds good for vector p:

$$pk = a(Qk) * b(Qk) * \{1 + d(Qk)\} * \Sigma\{Hlk * c(Ql)\} + b(Qk)$$

The values for a, b, c and d for this illustrative embodiment are shown in table 1.

The requested values for $z1,...,z9$ - the polling session lengths - can be calculated from matrix A and vector p as completed above. See TABLE 5.

The second step is to calculate the relative polling time instants using the polling times per queue obtained in this way and the switchover time. See TABLE 6.

Finally, the absolute polling time instants can be calculated and written to the polling table using a start time to be allocated as a parameter. See TABLE 7.

It is pointed out that the polling table can be calculated once, using estimates or previous measurements of, in particular, the number of expected call records in the various queues, but that the polling table can alternatively be (re-)calculated regularly using new measurements or estimates. Such a recalculation could for example be performed prior to each complete polling cycle, (i.e. the cycle in which the entire polling table is processed). The information required with respect to the numbers of call records to be included in the calculation per queue may be gathered in two different ways:

- during a particular polling cycle, the mediation 2 may log the numbers of call records per queue and these numbers can be used as a basis for recalculating the polling table for the next polling cycle;
- prior to each polling cycle, the mediation 2 may perform an information cycle in which each subscriber exchange 1 is interrogated about the number of call records which are in the queue at that instant; these numbers are then used in the calculation of the new polling table.

For the sake of completeness, TABLE 8 shows the source code of the computer program by means of which the method according to the invention can be performed. This program was also used to produce the above illustrated embodiment.

```
EXCHANGE  1      EXCHANGE  2      EXCHANGE  3      EXCHANGE  4

a1 = 1           a2 = 1           a3 = 1           a4 = 2
b1 = 40          b2 = 40          b3 = 40          b4 = 40
c1 = 300         c2 = 300         c3 = 300         c4 = 300
d1 = 0.1         d2 = 0.1         d3 = 0.1         d4 = 0.1
e1 = 50          e2 = 50          e3 = 50          e4 = 50


ai = Average growth in CR files per 500 sec for exchange i
bi = Polling time per CR file in seconds for exchange i
ci = Switchover time in seconds for exchange i
di = Margin factor for exchange i
ei = Number of call records per CR file for exchange i
```

TABLE 1

$$fi = \frac{\sqrt{(ai(1+ai*bi)/(bi+ci))}}{\sum(\sqrt{(aj(1+aj*bj)/(bj+cj))})} \qquad (j=1..4)$$

Formula known from ref.[1]; n=4 exchanges

$$f1 = 0.2239 \qquad f2 = 0.2239 \qquad f3 = 0.2239 \qquad f4 = 0.3282$$

fi = the polling frequency of exchange i

TABLE 2

mi = [mt*fi]

mt = Σ(mj)        (j=1...4)

$$\frac{|(mt*fi - [mt*fi])|}{(mt*fi)} < 0.2$$

Iterative process in order to arrive at integers for the numbers of polling sessions in which the rounding between mt*fi and the rounded value thereof [mt*fi] should not be greater than 20%

The result of that iterative process is

mt = 9

m1 = 2    m2 = 2    m3 = 2    m4 = 3

mi = number of polling sessions per polling cycle at exchange i

mt = total number of polling sessions per polling cycle (in other words the size of the polling table)

TABLE 3

```
Assume GR = ½(√(5) - 1) = 0.618

Assume Xj = (j*GR)MOD1 for j = 1...mt    (j*GR)MOD1 is equal to
-> X(1...9) = (j*GR)MOD1                  the fraction of (j*GR)

Assume
Yj = 1    for j = 1...m1
Yj = 2    for j = (m1 + 1)...(m1 + m2)
Yj = 3    for j = (m1 + m2 + 1)...(m1 + m2 + m3)
Yj = 4    for j = (m1 + m2 + m3 +1)...mt

-> Y(1...2) = 1
-> Y(3...4) = 2
-> Y(5...6) = 3
-> Y(7...9) = 4
```

From the above assumptions the results are then

| j | j*GR | Xj = (j*GR)MOD1 | Yj |
|---|------|-----------------|-----|
| j = 1 | 1*0.618 = 0.618 | (1*0.618)MOD1 = 0.618 | Y1 = 1 |
| j = 2 | 2*0.618 = 1.236 | (2*0.618)MOD1 = 0.236 | Y2 = 1 |
| j = 3 | 3*0.618 = 1.854 | (3*0.618)MOD1 = 0.854 | Y3 = 2 |
| j = 4 | 4*0.618 = 2.472 | (4*0.618)MOD1 = 0.472 | Y4 = 2 |
| j = 5 | 5*0.618 = 3.090 | (5*0.618)MOD1 = 0.090 | Y5 = 3 |
| j = 6 | 6*0.618 = 3.708 | (6*0.618)MOD1 = 0.708 | Y6 = 3 |
| j = 7 | 7*0.618 = 4.326 | (7*0.618)MOD1 = 0.326 | Y7 = 4 |
| j = 8 | 8*0.618 = 4.944 | (8*0.618)MOD1 = 0.944 | Y8 = 4 |
| j = 9 | 9*0.618 = 5.562 | (9*0.618)MOD1 = 0.562 | Y9 = 4 |

Sort the row (X1...X9) in increasing magnitude
and sort the row (Y1...Y9) in the same sequence
as the row (X1...X9):

| j | j*GR | Xj = (j*GR)MOD1 | Yj |
|---|------|-----------------|-----|
| j = 5 | 5*0.618 = 3.090 | (5*0.618)MOD1 = 0.090 | Y5 = 3 |
| j = 2 | 2*0.618 = 1.236 | (2*0.618)MOD1 = 0.236 | Y2 = 1 |
| j = 7 | 7*0.618 = 4.326 | (7*0.618)MOD1 = 0.326 | Y7 = 4 |
| j = 4 | 4*0.618 = 2.472 | (4*0.618)MOD1 = 0.472 | Y4 = 2 |
| j = 9 | 9*0.618 = 5.562 | (9*0.618)MOD1 = 0.562 | Y9 = 4 |
| j = 1 | 1*0.618 = 0.618 | (1*0.618)MOD1 = 0.618 | Y1 = 1 |
| j = 6 | 6*0.618 = 3.708 | (6*0.618)MOD1 = 0.708 | Y6 = 3 |
| j = 3 | 3*0.618 = 1.854 | (3*0.618)MOD1 = 0.854 | Y3 = 2 |
| j = 8 | 8*0.618 = 4.944 | (8*0.618)MOD1 = 0.944 | Y8 = 4 |

TABLE 4a

```
Designate the resulting newly arranged row Y(1...9) as (Q1...Q9):

  j(old)            Yj            j(new)            Qj

  j = 5          Y5 = 3          j = 1          Q1 = 3
  j = 2          Y2 = 1          j = 2          Q2 = 1
  j = 7          Y7 = 4          j = 3          Q3 = 4
  j = 4          Y4 = 2          j = 4          Q4 = 2
  j = 9          Y9 = 4          j = 5          Q5 = 4
  j = 1          Y1 = 1          j = 6          Q6 = 1
  j = 6          Y6 = 3          j = 7          Q7 = 3
  j = 3          Y3 = 2          j = 8          Q8 = 2
  j = 8          Y8 = 4          j = 9          Q9 = 4

Thus the result becomes:

  During the 1st. polling session exchange 3 is polled
    -      -    2nd.    -         -         -      1  -    -
    -      -    3rd.    -         -         -      4  -    -
    -      -    4th.    -         -         -      2  -    -
    -      -    5th.    -         -         -      4  -    -
    -      -    6th.    -         -         -      1  -    -
    -      -    7th.    -         -         -      3  -    -
    -      -    8th.    -         -         -      2  -    -
    -      -    9th.    -         -         -      4  -    -
```

TABLE 4b

In this illustrative embodiment Matrix H is:

```
0 1 1 1 0 0 1 0 0
0 0 1 1 0 1 1 0 0
0 0 0 1 1 1 1 0 0
0 0 0 0 1 1 1 1 0
0 0 0 0 0 1 1 1 1
0 1 0 0 0 0 1 1 1
1 1 0 0 0 0 0 1 1
1 1 0 1 0 0 0 0 1
1 1 1 1 0 0 0 0 0
```

Matrix A looks like this:

```
  1.000   0.000   0.000   0.000   0.000   0.000  -0.088  -0.088  -0.088
 -0.088   1.000   0.000   0.000   0.000  -0.088  -0.088  -0.088  -0.088
 -0.176  -0.176   1.000   0.000   0.000   0.000   0.000   0.000  -0.176
 -0.088  -0.088  -0.088   1.000   0.000   0.000   0.000  -0.088  -0.088
  0.000   0.000  -0.176  -0.176   1.000   0.000   0.000   0.000   0.000
  0.000  -0.088  -0.088  -0.088  -0.088   1.000   0.000   0.000   0.000
 -0.088  -0.088  -0.088  -0.088  -0.088  -0.088   1.000   0.000   0.000
  0.000   0.000   0.000  -0.088  -0.088  -0.088  -0.088   1.000   0.000
  0.000   0.000   0.000   0.000  -0.176  -0.176  -0.176  -0.176   1.000
```

Vector p is equal to:

```
119.2
172.0
198.4
172.0
145.6
145.6
198.4
145.6
251.2
```

The values for vector z, the lengths of the polling sessions, can thus be calculated from A * z = p, which gives the result:

```
The 1st. polling session lasts 211.4 seconds (excl. switch.time)
  -  2nd.      -        -        -     305.3      -        -          -
  -  3rd.      -        -        -     368.2      -        -          -
  -  4th.      -        -        -     311.3      -        -          -
  -  5th.      -        -        -     265.2      -        -          -
  -  6th.      -        -        -     255.6      -        -          -
  -  7th.      -        -        -     349.5      -        -          -
  -  8th.      -        -        -     249.6      -        -          -
  -  9th.      -        -        -     448.3      -        -          -
```

TABLE 5

If the start time instant is set to t = 0.0 seconds and the values
of Table 5 are incremented by the switchover times, this gives:

```
The 1st. polling session starts at t =      0.0 seconds
  -  2nd.      -          -         -      -   -    511.4      -
  -  3rd.      -          -         -      -   -   1116.6      -
  -  4th.      -          -         -      -   -   1784.9      -
  -  5th.      -          -         -      -   -   2396.1      -
  -  6th.      -          -         -      -   -   2961.3      -
  -  7th.      -          -         -      -   -   3516.9      -
  -  8th.      -          -         -      -   -   4166.4      -
  -  9th.      -          -         -      -   -   4716.0      -
```

TABLE 6

If the start time instant is set to t = 1000.0 seconds and the
values of Table 6 are incremented by the start time instant, this
gives:

```
The 1st. session (exchange 3) starts at t = 1000.0 seconds
  -  2nd.     -      (    -     1)    -      -  t = 1511.4      -
  -  3rd.     -      (    -     4)    -      -  t = 2116.6      -
  -  4th.     -      (    -     2)    -      -  t = 2784.9      -
  -  5th.     -      (    -     4)    -      -  t = 3396.1      -
  -  6th.     -      (    -     1)    -      -  t = 3961.3      -
  -  7th.     -      (    -     3)    -      -  t = 4516.9      -
  -  8th.     -      (    -     2)    -      -  t = 5166.4      -
  -  9th.     -      (    -     4)    -      -  t = 5716.0      -
```

TABLE 7

TABLE 8

```
PROGRAM FTPtool (input,output);

{$R+} (*Range checker on*)

(*The FTPtool program automatically develops an efficient FTP schedule as described in the
  patent application.

  This program uses pointers to prevent memory problems.


  INPUT:

  - the number of exchanges and

    per exchange:

  - the number of connections
  - the number of calls per day per connection
  - the transmission speed (in bits per second)
  - the size of a call record (in bytes)
  - the size of a file (in call records)
  - the switchover time (in second) and
  - the margin factor (default: 0.01).

  OUTPUT:

  The efficient FTP schedule developed,
  which is stored in a file in the following form:

  exchange number : polling time instants                                *)

CONST MaxExchanges=33;
      Maxm_tot=100;   (*Maximum number of polling sessions per polling cycle*)
```

(Continuation)

```pascal
TYPE ARRAY1=ARRAY [1..MaxExchanges] OF REAL;
     ARRAY2=ARRAY [1..MaxExchanges] OF 1..Maxm_tot;

     glnpbynp = ^theGlnpbynp;
     theGlnpbynp = ARRAY [1..Maxm_tot,1..Maxm_tot] OF REAL;
     glnarray = ARRAY [1..Maxm_tot] OF REAL;
     glindx = ARRAY [1..Maxm_tot] OF INTEGER;

VAR NumberExchanges:1..MaxExchanges;
    Connections,Calls,TrSpd,CRSiz,FlSiz:REAL;
    Switchovertime,Epsilon,lambda,b,rho:ARRAY1;
    lambda_tot,b_tot,rho_tot,Switch_tot,Epsilon_tot,C:REAL;
    m:ARRAY2;
    m_tot:0..Maxm_tot;
    Starttime,D:ARRAY [1..Maxm_tot] OF REAL;
    Q:ARRAY [1..Maxm_tot] OF 1..MaxExchanges;

    filename:STRING;
    rf1,rf2,rf3,rf4:text;

PROCEDURE Golden_Ratio (m:ARRAY2);
VAR phi,minimum:REAL;
    i,j,index:1..Maxm_tot;
    X:glnarray;
    Y:ARRAY [1..Maxm_tot] OF 1..MaxExchanges;
BEGIN
    phi:=0.5*(sqrt(5)-1);
    writeln(rf4,'The Golden Ratio number GR is equal to ',phi:5:4);
    m_tot:=0;
    FOR i:=1 TO NumberExchanges DO
        BEGIN
          m_tot:=m_tot+m[i];
```

(Is continued)

EP 0 577 177 B1

(Continuation)

```
        FOR j:=m_tot-m[i]+1 TO m_tot DO
            BEGIN
              X[j]:=j*phi-TRUNC(j*phi);                    (* =(j*phi) MOD 1 *)
              Y[j]:=i;
            END;
      END;
  FOR i:=1 TO m_tot DO
        writeln(rf4,'X[',i,']=',X[i]:5:3,'          Y[',i,']=',Y[i]);
  writeln(rf4);
  FOR i:=1 TO m_tot DO
      BEGIN
        minimum:=X[1];
        index:=1;
        FOR j:=2 TO m_tot DO IF X[j]<minimum THEN BEGIN
                                              minimum:=X[j];
                                              index:=j;
                                            END;

        Q[i]:=Y[index];
        X[index]:=2;                          (*read: X[index]:='infinite'*)
        writeln(rf4,'X[',i,'] becomes ',minimum:5:3,'  Q[',i,']=',Q[i]);
      END;
    writeln(rf4,'**********');
END;(*Golden_Ratio*)

PROCEDURE lubksb(a: glnpbynp; n: integer; indx: glindx; VAR b: glnarray);
(* Programs using LUBKSB must define the types

   TYPE
     glnarray = ARRAY [1..n] OF real;
     glindx = ARRAY [1..n] OF integer;
     glnpbynp = ARRAY [1..np,1..np] OF real;

   in the main routine.
```

(Is continued)

EP 0 577 177 B1

(Continuation)

```
    LUBKSB stands for LU-decomposition BacKward SuBstitution:  This can be used to solve the system
    of linear equations Ax=b, A being rearranged into the form LU *)
VAR
    j,ip,ii,i: integer;
    sum: real;
BEGIN
    ii := 0;
    FOR i := 1 to n DO BEGIN
        ip := indx[i];
        sum := b[ip];
        b[ip] := b[i];
        IF  (ii <> 0) THEN BEGIN
            FOR j := ii to i-1 DO BEGIN
                sum := sum-a^[i,j]*b[j]
            END
        END ELSE IF (sum <> 0.0) THEN BEGIN
            ii := i
        END;
        b[i] := sum
    END;
    FOR i := n DOWNTO 1 DO BEGIN
        sum := b[i];
        IF (i < n) THEN BEGIN
            FOR j := i+1 to n DO BEGIN
                sum := sum-a^[i,j]*b[j]
            END
        END;
        b[i] := sum/a^[i,i]
    END
END;(*lubksb*)
```

(Is continued)

EP 0 577 177 B1

(Continuation)

```
PROCEDURE ludcmp(VAR a: glnpbynp; n: integer;
      VAR indx: glindx; VAR d: real);
(* Programs using LUDCMP must define the types

   TYPE
     glnpbynp = ARRAY [1..np,1..np] OF real;
     glnarray = ARRAY [1..n] OF real;
     glindx = ARRAY [1..n] OF integer;

   in the main routine.

   LUDCMP stands for LU-DeCoMPosition: a method to rearrange a matrix A into the form LU, L being
   a left-lower matrix and U being a right-upper matrix *)
CONST
   tiny=1.0e-20;
VAR
   k,j,imax,i: integer;
   sum,dum,big: real;
   vv: glnarray;
BEGIN
   d := 1.0;
   FOR i := 1 to n DO BEGIN
      big := 0.0;
      FOR j := 1 to n DO IF (abs(a^[i,j]) > big) THEN big := abs(a^[i,j]);
      IF (big = 0.0) THEN BEGIN
         writeln('pause in LUDCMP - singular matrix'); readln
      END;
      vv[i] := 1.0/big
   END;
   FOR j := 1 to n DO BEGIN
      IF (j > 1) THEN BEGIN
        FOR i := 1 to j-1 DO BEGIN
```

(Is continued)

EP 0 577 177 B1

(Continuation)

```
        sum := a^[i,j];
        IF (i > 1) THEN BEGIN
            FOR k := 1 to i-1 DO BEGIN
                sum := sum-a^[i,k]*a^[k,j]
            END;
            a^[i,j] := sum
        END
    END
END;
big := 0.0;
FOR i := j to n DO BEGIN
    sum := a^[i,j];
    IF (j >1) THEN BEGIN
        FOR k := 1 to j-1 DO BEGIN
            sum := sum-a^[i,k]*a^[k,j]
        END;
        a^[i,j] := sum
    END;
    dum := vv[i]*abs(sum);
    IF (dum > big) THEN BEGIN
        big := dum;
        imax := i
    END
END;
IF (j <> imax) THEN BEGIN
    FOR k := 1 to n DO BEGIN
        dum := a^[imax,k];
        a^[imax,k] := a^[j,k];
        a^{j,k] := dum
    END;
    d := -d;
    vv[imax] := vv[j]
END;
```

(Is continued)

EP 0 577 177 B1

(Continuation)

```
        indx[j] := imax;
        IF (j <> n) THEN BEGIN
            IF (a^[j,j] = 0.0) THEN a^[j,j] := tiny;
            dum := 1.0/a^[j,j];
            FOR i := j+1 to n DO BEGIN
                a^[i,j] := a^[i,j]*dum
            END
        END
    END;
    IF (a^[n,n] = 0.0) THEN a^[n,n] := tiny
END;(*ludcmp*)

PROCEDURE EffFTP3;
VAR i:1..MaxExchanges+1;
    j,k:1..Maxm_tot;
    h1:0..Maxm_tot+1;
    f:ARRAY1;
    f_tot,h2:REAL;
    auxiliary:INTEGER;

    h,a:glnpbynp;
    vector_b:glnarray;
    indx:glindx;
    d:REAL;

    answer:0..1;
    OK:BOOLEAN;
BEGIN
  NEW(h);
  NEW(a);

  writeln;
  writeln('Should the number of visits to each exchange be determined automatically?
```

(Is continued)

EP 0 577 177 B1

(Continuation)

```
(yes=1/no=0');
  readln(answer);   (*in patent application: answer=1*)
  IF answer=1 THEN
      BEGIN
        (*Determine the visit frequencies*)
        f_tot:=0;
        FOR i:=1 TO NumberExchanges DO
            BEGIN
              f[i]:=sqrt(lambda[i]*(1+rho[i])/(b[i]+Switchovertime[i]));
              f_tot:=f_tot+f[i];
            END;
        FOR i:=1 TO NumberExchanges DO
            BEGIN
              f[i]:=f[i]/f_tot;
              writeln(rf4,'The polling frequency of exchange ',i,' is ',f[i]:5:4);
            END;
        writeln(rf4,'**********');


        (*Determine the total number of visits per polling cycle*)
        IF (NumberExchanges MOD 2)=0 THEN auxiliary:=NumberExchanges DIV 2
        ELSE auxiliary:=NumberExchanges;
        REPEAT
          auxiliary:=2*auxiliary;
          OK:=TRUE;
          i:=1;
          WHILE (OK) AND (i<NumberExchanges+1) DO
            BEGIN
              IF ABS(auxiliary*f[i]-ROUND(auxiliary*f[i]))/(auxiliary*f[i])>0.2 THEN OK:=FALSE;
              i:=i+1;
            END;
          UNTIL OK;
          IF auxiliary>Maxm_tot THEN auxiliary:=Maxm_tot;
```

(Is continued)

EP 0 577 177 B1

```
(Continuation)
        (*Determine the number of visits to each exchange per polling cycle*)
        FOR i:=1 TO NumberExchanges DO m[i]:=ROUND(auxiliary*f[i]);
    END
  ELSE FOR i:=1 TO NumberExchanges DO
            BEGIN
              writeln('How often should exchange',i,' be visited per polling cycle?');
              readln(m[i]);
            END;

  auxiliary:=0;
  FOR i:=1 TO NumberExchanges DO auxiliary:=auxiliary+m[i];
  IF auxiliary>Maxm_tot THEN writeln ('ERROR: Constant Maxm_tot too small.')
  ELSE m_tot:=auxiliary;

  writeln(rf4,'The total number of polling sessions per polling cycle is ',m_tot);
  FOR i:=1 TO NumberExchanges DO
      writeln(rf4,'The number of polling sessions per polling cycle at exchange ',i,' is ',m[i]);
  writeln(rf4,'**********');

  (*Determine the visit sequence*)
  writeln('Should the visit sequence be determined automatically? (yes=1/no=0)');
  readln(answer);   (*in patent application: answer=1*)
  IF answer=1 THEN Golden_Ratio(m)
  ELSE FOR j:=1 TO m_tot DO
            BEGIN
              writeln('Which exchange is polled during visit ',j,'?');
              readln(Q[j]);
            END;

  FOR j:=1 TO m_tot DO
      writeln(rf4,'During polling session ',j,', exchange ',Q[j],' is polled.');
  writeln(rf4,'**********');


(Is continued)
```

EP 0 577 177 B1

(Continuation)

```
(*Determine the h matrix*)
FOR k:=1 TO m_tot DO
    FOR j:=1 TO m_tot DO
        BEGIN
          h^[k,j]:=1;
          IF k<j THEN
              FOR h1:=k+1 TO j-1 DO IF Q[h1]=Q[j] THEN h^[k,j]:=0;
          IF j<k THEN
            BEGIN
              FOR h1:=k+1 TO m_tot DO IF Q[h1]=Q[j] THEN h^[k,j]:=0;
              FOR h1:=1 TO j-1 DO IF Q[h1]=Q[j] THEN h^[k,j]:=0;
            END;
          IF k=j THEN IF m[Q[j]]>1 THEN h^[k,j]:=0;
        END;

writeln(rf4,'The H matrix is equal to');    { h=H }
writeln(rf4);
FOR k:=1 TO m_tot DO
    BEGIN
      FOR j:=1 TO m_tot DO
          write(rf4,h^[k,j]:2:0);
      writeln(rf4);
    END;
writeln(rf4,'**********');

(*Determine the a matrix*)
FOR j:=1 TO m_tot DO
    FOR k:=1 TO m_tot DO
        IF j<>k THEN a^[j,k]:=-h^[k,j]*(rho[Q[j]]*(1+Epsilon[Q[j]]))
        ELSE a^[j,k]:=1-h^[k,j]*(rho[Q[j]]*(1+Epsilon[Q[j]]));

writeln(rf4,'The A matrix is equal to');   { a=A }
```

(Is continued)

EP 0 577 177 B1

```
(Continuation)
    writeln(rf4);
    FOR k:=1 TO m_tot DO
        BEGIN
          FOR j:=1 TO m_tot DO
              write(rf4,a^[k,j]:7:3,' ');
          writeln(rf4);
        END;
    writeln(rf4,'**********');

    (*Determine the b vector*)
    FOR j:=1 TO m_tot DO
        BEGIN
          h2:=0;
          FOR k:=1 TO m_tot DO h2:=h2+h^[k,j]*Switchovertime[Q[k]];
          vector_b[j]:=rho[Q[j]]*(1+Epsilon[Q[j]])*h2+b[Q[j]];
        END;

    (*The b vector is called p in the patent application*)
    writeln(rf4,'The p vector is equal to');
    writeln(rf4);
    FOR j:=1 TO m_tot DO
        writeln(rf4,'        ',vector_b[j]:7:1);
    writeln(rf4,'**********');

    (*Determine LU decomposition and solve Ax=b, where x[j]=E[j] *)
    ludcmp(a,m_tot,indx,d);
    lubksb(a,m_tot,indx,vector_b);    (*vector_b[j] is now equal to E[j]*)

    FOR j:=1 TO m_tot DO
        writeln(rf4,'The polling session ',j,' lasts for ',vector_b[j]:7:1,' seconds (excl.
switchover time).');
    writeln(rf4,'**********');


(Is continued)
```

EP 0 577 177 B1

(Continuation)

```
    (*Determine the start times*)
    Starttime[1]:=0;   (*This is by choice*)
    writeln(rf4,'The 1st. polling session starts at ', Starttime[1]:7:1,' seconds.');
    writeln(rf4);
    writeln(rf4,'By combining the above results it is possible to derive that');
    writeln(rf4);

    FOR j:=1 TO m_tot-1 DO
         Starttime[j+1]:=Starttime[j]+Switchovertime[Q[j]]+vector_b[j];
    C:=Starttime[m_tot]+Switchovertime[Q[m_tot]]+vector_b[m_tot];

    FOR j:=2 TO m_tot DO
         writeln(rf4,'Polling session ',j,' starts at ',Starttime[j]:7:1,' seconds.');
    writeln(rf4,'**********');

    writeln(rf4,'The polling time instants table is now equal to');
    writeln(rf4);
    writeln(rf4,'   INDEX        EXCHANGE       POLLING SESSION STARTS AT (in seconds)');
    FOR j:=1 TO m_tot DO
         writeln(rf4,'      ',j,'             ',Q[j],'                ',Starttime[j]:7:1);
    writeln(rf4,'**********');

    DISPOSE(h);
    DISPOSE(a);
END;(*EffFTP3*)

PROCEDURE InputNetworkconfiguration;
VAR OK:BOOLEAN;
    i:1..MaxExchanges;
    answer:0..1;
    name:STRING;
BEGIN
  REPEAT
```

(Is continued)

(Continuation)

```
OK:=TRUE;
lambda_tot:=0;
b_tot:=0;
rho_tot:=0;
Switch_tot:=0;
Epsilon_tot:=0;

writeln;
writeln('Should the network configuration be input from a file? (yes=1/no=0)');
readln(answer);
IF answer=0 THEN
   BEGIN
      writeln('In which file should the network configuration be stored?');
      readln(name);
      assign(rfl,name);
      rewrite(rfl);
      writeln(rfl,'ExchangeNo-Connect-Calls-TrSpd-CRSiz-FlSiz-Switch-Epsilon');
      writeln;
      writeln('How many exchanges should be polled?');
      readln(NumberExchanges);
      FOR i:=1 TO NumberExchanges DO
          BEGIN
             writeln;
             writeln('How many connections does exchange ',i,' have?');
             readln(Connections);
             writeln('How many calls take place per day per connection at exchange ',i,' ?');
             readln(Calls);
             writeln('What is the transmission speed at exchange ',i,' ? (bits/sec.)');
             readln(TrSpd);
             writeln('What is the size of a call-record at exchange ',i,' ? (byte)');
             readln(CRSiz);
             writeln('What is the size of a file at exchange ',i,' ? (call-records)');
```

(Is continued)

EP 0 577 177 B1

(Continuation)

```
                readln(FlSiz);
                writeln('What is the switchover time to exchange ',i,' ? (sec.)');
                readln(Switchovertime[i]);
                writeln('What is the margin factor at exchange ',i,' ?');
                readln(Epsilon[i]);
                write(rf1,i);
                write(rf1,Connections);
                write(rf1,Calls);
                write(rf1,TrSpd);
                write(rf1,CRSiz);
                write(rf1,FlSiz);
                write(rf1,Switchovertime[i]);
                writeln(rf1,Epsilon[i]);
                lambda[i]:=Connections/FlSiz/24/3600*Calls;
                lambda_tot:=lambda_tot+lambda[i];
                b[i]:=FlSiz/TrSpd*CRSiz*8;
                b_tot:=b_tot+b[i];
                rho[i]:=lambda[i]*b[i];
                rho_tot:=rho_tot+rho[i];
                Switch_tot:=Switch_tot+Switchovertime[i];
                Epsilon_tot:=Epsilon_tot+Epsilon[i];
                writeln(rf4,'Exchange ',i,' has the following characteristic values:');
                writeln(rf4,'     Average growth: ',500*lambda[i]:4:2,' files per 500 seconds');
                writeln(rf4,'     Polling time per file: ',b[i]:6:4,' seconds');
                writeln(rf4,'     Switchover time: ',Switchovertime[i]:4:1,' seconds');
                writeln(rf4,'     Margin factor: ',Epsilon[i]:4:2);
                writeln(rf4,'     File size: ',FlSiz:4:2,' call records');
                writeln(rf4,'**********');
            END;
        close(rf1);
      END
   ELSE
```

(Is continued)

(Continuation)

```
    BEGIN
      writeln('From which file should the network configuration be input?');
      readln(name);
      assign(rf2,name);
      reset(rf2);
      readln(rf2);
      WHILE NOT EOF(rf2) DO
        BEGIN
          read(rf2,i);
          read(rf2,Connections);
          read(rf2,Calls);
          read(rf2,TrSpd);
          read(rf2,CRSiz);
          read(rf2,FlSiz);
          read(rf2,Switchovertime[i]);
          readln(rf2,Epsilon[i]);
          lambda[i]:=Connections/FlSiz/24/3600*Calls;
          lambda_tot:=lambda_tot+lambda[i];
          b[i]:=FlSiz/TrSpd*CRSiz*8;
          b_tot:=b_tot+b[i];
          rho[i]:=lambda[i]*b[i];
          rho_tot:=rho_tot+rho[i];
          Switch_tot:=Switch_tot+Switchovertime[i];
          Epsilon_tot:=Epsilon_tot+Epsilon[i];
          writeln(rf4,'Exchange ',i,' has the following characteristic values:');
          writeln(rf4,'    Average growth: ',500*lambda[i]:4:2,' files per 500 seconds');
          writeln(rf4,'    Polling time per file: ',b[i]:6:4,' seconds');
          writeln(rf4,'    Switchover time: ',Switchovertime[i]:4:1,' seconds');
          writeln(rf4,'    Margin factor: ',Epsilon[i]:4:2);
          writeln(rf4,'    File size: ',FlSiz:4:2,' call records');
          writeln(rf4,'**********');
        END;
```

(Is continued)

EP 0 577 177 B1

(Continuation)

```
        NumberExchanges:=i;
        close(rf2);
     END;
  writeln;
  writeln('Did network configuration input proceed as required? (yes=1/no=0)');
  readln(answer);
  IF answer=0 THEN OK:=FALSE;
  UNTIL OK;

  IF rho_tot>=1 THEN writeln('ERROR: Mediation occupancy >=100%');

END;(*InputNetworkconfiguration*)

PROCEDURE StoreFTPscheduleInFile;
VAR i:1..MaxExchanges;
    j:1..Maxm_tot+1;
    k:0..Maxm_tot;
    h1,h2:REAL;
    name:STRING;
BEGIN
  writeln;
  writeln('In which file should the FTP-schedule be stored?');
  readln(name);
  assign(rf3,name);
  rewrite(rf3);
  writeln(rf3,'The polling cycle has a duration of ',C:6:2,' seconds.');
  writeln(rf3);
  writeln(rf3,'Exchange number: Polling time instants (in seconds)');
  FOR i:=1 TO NumberExchanges DO
      BEGIN
      (*In the case of simulations, other output must be written to a file.  For this
        reason some statements below are placed between braces.  These, therefore, are
        the statements which are necessary to write the correct output to a file if the
        FTP-schedule
```

(Is continued)

(Continuation)

```
        has to be simulated as well*)

{        write(rf3,i);}
        write(rf3,i);
{        write(rf3,' ');}
        write(rf3,' : ');
{        write(rf3,m[i]);}
        j:=1;
        k:=0;
        h1:=0;
        WHILE k<m[i] DO
          BEGIN
            IF Q[j]=i THEN
              BEGIN
{                write(rf3,Starttime[j]-h1);}
                write(rf3,Starttime[j]:4:2);
                write(rf3,' ');
                h1:=Starttime[j];
                IF k=0 THEN h2:=Starttime[j];
                k:=k+1;
              END;
            j:=j+1;
          END;
{        writeln(rf3,C-h1+h2);}
        writeln(rf3);
      END;
  close(rf3);
  writeln;
  writeln('Press <Return> to end...');
  readln;
END;(*StoreFTPscheduleInFile*)
```

(Is continued)

EP 0 577 177 B1

```
(Continuation)

BEGIN (*Mainprogram*)
  writeln;
  writeln('In which file should results of the calculation be stored?');
  readln(filename);
  assign(rf4,filename);
  rewrite(rf4);
  writeln(rf4,'Intermediate results during the generation of a polling table');
  writeln(rf4,'**********');
  InputNetworkconfiguration;
  EffFTP3;
  StoreFTPscheduleInFile;
  close(rf4);
END.
```

EP 0 577 177 B1

## Claims

1. Telecommunication network, comprising a mediation centre and a number of network stations, the mediation centre executing consecutive polling sessions, during which data queues in those network stations, comprising data elements, are polled in accordance to a polling table, CHARACTERISED IN THAT the mediation centre is adapted to calculate automatically an absolute-polling-time-instants table, presenting absolute starting moments of the consecutive polling sessions, comprising the following steps :
   - a polling sequence table, presenting the network stations which will be polled at the consecutive polling sessions, is calculated, using, for the various data queues, the queue growth (ai), the polling time per data element (bi) and the switchover time (ci) between two queues to be polled consecutively;
   - a polling session-lengths table, presenting the session-lengths which are needed for the consecutive polling sessions, is calculated, also using, for the various data queues, the queue growth (ai), the polling time per data element (bi) and the switchover time (ci) between two queues to be polled consecutively, as well as a margin factor (di) for each queue,
   establishing a first matrix (H) having a length (l) and a width (k) equal to the size of said polling sequence table, which first matrix indicates, by values H{lk} whether the polling sessions are or are not found in a part of the total cycle of polling sessions, said part starting with an occurrence in said polling sessions cycle of a network station and ending with next occurrence of the same network station, and establising a second matrix (A) having the same dimensions as said first matrix and comprising values, calculated from said queue growth (ai), polling time (bi) and switchover time (ci) values, together with said first matrix values (H{lk}), according to the formulae
   $$A\{kl\} = - H\{lk\} * a\{Qk\} * b\{Qk\} * (1 + d\{Qk\}) \text{ if } k \neq l, \text{ and}$$
   $$A\{kl\} = 1 - H\{lk\} * a\{Qk\} * b\{Qk\} * (1 + d\{Qk\}) \text{ if } k = l,$$
   as well as using a vector (p), of which
   $$p\{k\} = a\{Qk\} * b\{Qk\} * (1 + d\{Qk\} * \Sigma(H\{lk\} * c\{Ql\})) + b\{Qk\},$$
   Q{n} indicating the various network stations being polled,
   said polling session-length table, indicated by Z, being calculated from $Z = A^{-1} * p$,
   - a relative polling time-instants table, presenting relative starting moments of the consecutive polling sessions, is calculated, using said polling session-lengths table, inserting the switchover times (ci) in the session-length values for the consecutive polling sessions;
   - the absolute polling time-instants table, is calculated, using said relative polling time-instants table, as well as an absolute starting moment.

2. Telecommunication network according to Claim 1, CHARACTERISED IN THAT the mediation centre is adapted to calculate the absolute polling time-instants table once, during initialisation using the queue characteristic values which apply at initialisation.

3. Telecommunication network according to Claim 1, CHARACTERISED IN THAT the mediation centre is adapted to recalculate the absolute polling time-instants table periodically using the queue characteristic values which apply at that time.

4. Telecommunication network according to Claim 1, CHARACTERISED IN THAT the mediation centre is adapted to recalculate the absolute polling time-instants table if the queue characteristic values change.

5. Telecommunication network according to Claim 1, CHARACTERISED IN THAT the mediation centre is adapted to recalculate the absolute polling time-instants table if the queue characteristic values change and said change exceeds a certain threshlod value.

## Patentansprüche

1. Telekommunikations-Netzwerk, umfassend ein Vermittlungszentrum und eine Anzahl von Netzwerkstationen, wobei das Vermittlungszentrum aufeinanderfolgende Abfrage-Sessionen durchführt, während derer Datenelemente enthaltende Warteschlangen in diesen Netzwerkstationen gemäss einer Abfragetabelle abgefragt werden, DADURCH GEKENNZEICHNET, DASS das Vermittlungszentrum imstande ist, in automatischer Weise eine absolute Abfrage-Zeitmoment-Tabelle zu berechnen mit absoluten Startmomenten der konsekutiven Abfrage-Sessionen, umfassend folgende Schritte:

- Berechnung einer Abfrage-Sequenz-Tabelle, die sich auf die Netzwerkstationen richtet, die in konsekutiven Abfrage-Sessionen abzufragen sind, ausgehend, für die verschiedenen Daten-Warteschlangen, von der Zuwachsrate der Warteschlange (ai), der Abfragezeit pro Datenelement (bi) und der Umschaltzeit (ci) zwischen zwei aufeinanderfolgend abzufragenden Warteschlangen;
- Berechnung einer Abfrage-Sessionslängen-Tabelle, welche die für konsekutive Abfrage-Sessionen notwendigen Sessionslängen enthält, ebenfalls ausgehend, für die verschiedenen Warteschlangen, von der Zuwachsrate der Warteschlange (ai), der Abfragezeit pro Datenelement (bi) und der Umschaltzeit (ci) zwischen zwei aufeinanderfolgend abzufragenden Warteschlangen, sowie einem Randfaktor (di) für jede Warteschlange, indem eine erste Matrix (H) der Länge (1) und Weite (k), gleich der Grösse der erwähnten Abfrage-Sequenz-Tabelle, aufgestellt wird, welche erste Matrix durch ihre Werte H{lk} angibt, ob die Abfrage-Sessionen in einem bestimmten Teil des gesamten Abfragezyklus der Abfrage-Sessionen gefunden werden konnten oder nicht, wobei dieser Teil mit einem Auftreten einer Netzwerkstation im erwähnten Abfragesessions-Zyklus beginnt und mit dem nächsten Auftreten derselben Netzwerkstation endet, und indem eine zweite Matrix (A) mit denselben Dimensionen wie die erwähnte erste Matrix aufgestellt wird, welche Werte enthält, die aus den Werten der erwähnten Zuwachsrate (ai) der Warteschlange, der Abfragezeit (bi) und der Umschaltzeit (ci) berechnet werden, zusammen mit den Werten der ersten Matrix (H{lk}), gemäss den Formeln

$$A\{kl\} = - H\{lk\} * a\{Qk\} * b\{Qk\} * (1 + d\{Qk\})$$

falls $k \neq 1$, und

$$A\{kl\} = 1 - H\{lk\} * a\{Qk\} * b\{Qk\} * (1 + d\{Qk\})$$

falls $k = 1$,

sowie mit Hilfe eines Vektors p gemäss

$$p\{k\} = a\{Qk\} * b\{Qk\} * (1 + d\{Qk\}) * \Sigma(H\{lk\} * c\{Ql\}) + b\{Qk\},$$

wobei Q{n} die verschiedenen abzufragenden Netzwerkstationen angibt, wobei sich die besagte Abfrage-Sessionslängen-Tabelle Z als

$$Z = A^{-1} * p$$

ergibt;

- Berechnung einer relativen Abfrage-Zeitmoment-Tabelle, welche die relativen Startmomente der konsekutiven Abfrage-Sessionen enthält, unter Benützung der erwähnten Abfrage-Sessionslängen-Tabelle und Zufügen der Umschaltzeiten (ci) zu den Sessionslängen-Werten für die konsekutiven Abfrage-Sessionen;
- Berechnung der absoluten Abfrage-Zeitmoment-Tabelle, ausgehend von der relativen Abfrage-Zeitmoment-Tabelle und einem absoluten Startzeitpunkt.

2. Telekommunikationsnetzwerk gemäss Patentanspruch 1, DADURCH GEKENNZEICHNET, DASS das Vermittlungszentrum zur Berechnung der absoluten Abfrage-Zeitmoment-Tabelle ausgerüstet ist, und zwar während der Initialisierung, unter Verwendung der bei der Initialisierung anwendbaren charakteristischen Werte der Warteschlangen.

3. Telekommunikationsnetzwerk gemäss Patentanspruch 1, DADURCH GEKENNZEICHNET, DASS das Vermittlungszentrum zur periodischen Wiederberechnung der absoluten Abfrage-Zeitmoment-Tabelle ausgerüstet ist, unter Verwendung der jeweilig anwendbaren charakteristischen Werte der Warteschlangen.

4. Telekommunikationsnetzwerk gemäss Patentanspruch 1, DADURCH GEKENNZEICHNET, DASS das Vermittlungszentrum zur Wiederberechnung der absoluten Abfrage-Zeitmoment-Tabelle ausgerüstet ist, falls die charakteristischen Werte der Warteschlangen ändern.

5. Telekommunikationsnetzwerk gemäss Patentanspruch 1, DADURCH GEKENNZEICHNET, DASS das Vermittlungszentrum zur Wiederberechnung der absoluten Abfrage-Zeitmoment-Tabelle ausgerüstet ist, falls die charakteristischen Werte der Warteschlangen ändern und die besagte Aenderung einen bestimmten Schwellenwert überschreitet.

**Revendications**

1. Réseau de télécommunication, comprenant un centre de médiation et un certain nombre de stations de réseau, le centre de médiation exécutant des sessions d'interrogation consécutives pendant lesquelles des files d'attente de données dans ces stations de réseau, comprenant des éléments de données, sont interrogées conformément à une table d'interrogation, caractérisé en ce que le centre de médiation est conçu pour calculer automatiquement une table d'instants d'interrogation absolus présentant des instants de début absolus des sessions d'interrogation consécutives, comprenant les étapes suivantes :

   une table de séquence d'interrogation présentant les stations de réseau qui seront interrogées lors des sessions d'interrogation consécutives est calculée en utilisant pour les diverses files d'attente de données la taille de file d'attente ($a_i$), le temps d'interrogation par élément de données ($b_i$) et le temps de commutation ($c_i$) entre deux files d'attente à interroger consécutivement ;

   une table de longueurs de session d'interrogation présentant les longueurs de session qui sont nécessaires pour les sessions d'interrogation consécutives est calculée en utilisant également pour les diverses files d'attente de données la taille de file d'attente ($a_i$), le temps d'interrogation par élément de données ($b_i$) et le temps de commutation ($c_i$) entre deux files d'attente à interroger consécutivement, ainsi qu'un facteur de marge ($d_i$) pour chaque file d'attente,

   l'établissement d'une première matrice (H) présentant une longueur (l) et une largeur (k) égales à la taille de ladite table de séquence d'interrogation, laquelle première matrice indique au moyen de valeurs $H\{lk\}$ si oui ou non les sessions d'interrogation s'avèrent être dans une partie du cycle total des sessions d'interrogation, ladite partie commençant avec une survenue dans ledit cycle de sessions d'interrogation d'une station de réseau et se terminant avec la survenue suivante de la même station de réseau ; et

   établissement d'une seconde matrice (A) présentant les mêmes dimensions que ladite première matrice et comprenant des valeurs, calculées à partir desdites valeurs de taille de file d'attente ($a_i$), de temps d'interrogation ($b_i$) et de temps de commutation ($c_i$) ensemble avec lesdites premières valeurs de matrice ($H\{lk\}$) conformément à la formule :
   $$A\{kl\} = - H\{lk\} * a\{Qk\} * b\{Qk) * (1 + d\{Qk\}) \text{ si } k \neq 1 ; \text{ et}$$
   $$A\{kl\} = 1 - H\{lk\} * a\{Qk\} * b\{Qk\} * (1 + d\{Qk\}) \text{ si } k = 1,$$
   ainsi qu'en utilisant un vecteur (p) pour lequel
   $$p\{k\} = a\{Qk\} * b\{Qk\} * (1 + d\{Qk\} * \Sigma(H\{lk\} * c\{Ql\})) + b\{Qk\},$$
   $Q\{n\}$ indiquant les diverses stations de réseau qui sont interrogées, ladite table de longueurs de session d'interrogation indiquée par Z étant calculée comme suit : $Z = A^{-1} * p$ ;

   une table d'instants d'interrogation relatifs présentant des instants de début relatifs des sessions d'interrogation consécutives est calculée en utilisant ladite table de longueurs de session d'interrogation, en insérant les temps de commutation ($c_i$) dans les valeurs de longueur de session pour les sessions d'interrogation consécutives ;

   la table d'instants d'interrogation absolus est calculée en utilisant ladite table d'instants d'interrogation relatifs ainsi qu'un instant de début absolu.

2. Réseau de télécommunication selon la revendication 1, caractérisé en ce que le centre de médiation est conçu pour calculer la table d'instants d'interrogation absolus une fois pendant une initialisation en utilisant les valeurs de caractéristique de file d'attente qui s'appliquent lors de l'initialisation.

3. Réseau de télécommunication selon la revendication 1, caractérisé en ce que le centre de médiation est conçu pour recalculer la table d'instants d'interrogation absolus périodiquement en utilisant les valeurs de caractéristique de file d'attente qui s'appliquent à cet instant.

4. Réseau de télécommunication selon la revendication 1, caractérisé en ce que le centre de médiation est conçu pour recalculer la table d'instants d'interrogation absolus si les valeurs de caractéristique de file d'attente changent.

5. Réseau de télécommunication selon la revendication 1, caractérisé en ce que le centre de médiation est conçu pour recalculer la table d'instants d'interrogation absolus si les valeurs de caractéristique de file d'attente changent et si ledit changement excède une certaine valeur de seuil.

FIG.1